# EUROPEAN PATENT APPLICATION

(11) **EP 4 407 459 A1**
(43) Date of publication of application: **31.07.2024**
(21) Application number: 23156501.1
(22) Date of filing: 14.02.2023
(51) Int. Cl.: G06F 9/54, G06F 8/30, G06F 16/25

(54) **INTELLIGENT AUTOMATED WAY OF CREATING MAPPING PROGRAMS USING HISTORICAL MESSAGES**

(30) Priority: 25.01.2023 EP 23153322
(71) Applicant: Krawczyk, Michal, 60-193 Poznan (PL)
(72) Inventor: Krawczyk, Michal, 60-193 Poznan (PL)
(74) Representative: Suszczewicz, Romuald

(57) **Abstract**

Disclosed herein are system, method, and computer program product embodiments for creating mapping programs between a source system and a target system. An embodiment operates by selecting a set of source and target messages in a middleware system. The embodiment creates a message collection in a message collection store system based on a set of messages. The embodiment creates a new or updated mapping program automatically between the source and target messages on the basis of historical messages from the message store.

## Description

### TECHNICAL FIELD

The present invention relates to communication technology, in particular to communicating between a source system and a target system via a middleware system which uses a mapping program.

### BACKGROUND

A user often wants to integrate an application running on their premises (e.g., an Enterprise Resource Planning (ERP) system) with a cloud application. The application running on the user's premises can be integrated with the cloud application using a middleware system (e.g., a cloud based middleware system such as an Integration as a Service (IaaS) system). The middleware system can use a mapping program to connect the application running on the user's premises with the cloud application.

In cases when the middleware system is to be changed from an old system to a new system, there arises a technical problem of how to create a mapping program for the new system, which may have a different structure of the mapping program. Often, there is no available solution for migrating mapping programs from the old system to the new system. Therefore, typically the mapping program must be defined from scratch. The mapping program shall cater for all possible source-target message variants. This creates a risk for the user, since an incorrect or incomplete mapping program can break the integration between the applications.

Some prior art solutions for creating mapping programs between applications involve the user manually creating mapping programs. The user creates a mapping program and then runs a test to see if it's working. But this process suffers from several problems. First, the user has to design the mapping program without prior knowledge of all possible variants of source-target message combinations. This is cumbersome and error prone. Second, manual creation of mapping programs is very slow.

US1 1023361 discloses determining an integration regression between a source system and a target system. An embodiment operates by selecting a first set of messages in a middleware system. The embodiment receives a baseline mapping for the first set of messages from the middleware system, creates a test suite based on the first set of messages, performs the test suite, wherein the performing generates a second set of messages in the middleware system and a current mapping for the second set of messages, compares the first set of messages to the second set of messages based on the baseline mapping and the current mapping and determines an integration regression between the source system and the target system based on the comparing. However, it is not useful for generating a new mapping program in case of replacement of the middleware system.

### SUMMARY OF THE INVENTION

There is a need to solve at least some of the aforementioned problems of the prior art solutions related to mapping systems.

Provided herein are a system, apparatus, device, method and/or computer program product embodiments, and/or combinations and sub-combinations thereof, for an automated method of creating mapping programs using historical messages.

The object of the invention is a computer-implemented method for creating a mapping program for use by a new middleware system to be used between a source system and a target system communicating via an old middleware system, the method comprising: selecting a first set of messages in the old middleware system, wherein the first set of messages represent performance of a process between the source system and the target system; creating a message collection based on the first set of messages; generating the mapping program for use by the new middleware system based on the message collection.

The method may further comprise ordering the first set of messages based on a transaction log date.

The selecting may comprise: selecting an originating message in a log of the old middleware system, wherein the originating message represents a first message in the process between the source system and the target system; and selecting one or more messages related to the originating message in the log of the old middleware system, wherein the first set of messages comprise the originating message and the one or more messages related to the originating message in the log of the old middleware system.

The creating may comprise creating a message collection based on a message in the first set of messages and the baseline mapping for the first set of messages.

The method may further comprise outputting a set of mapping programs.

The invention also relates to a computer system comprising a memory; and at least one processor coupled to the memory and configured to perform the method as described herein.

The invention further relates to a non-transitory computer-readable storage device having instructions stored thereon that, when executed by at least one computing device, causes the at least one computing device to perform the method as described herein.

### BRIEF DESCRIPTION OF THE DRAWINGS

The invention is shown by means of example embodiments on a drawing, wherein:
Fig. 1 shows an overall block diagram of an environment in which an application is integrated with another application using a middleware system according to some embodiments;
Fig. 2 shows a block diagram illustrating use of a message collection store system to generate a mapping program, according to some embodiments;
Fig. 3 shows a flowchart for a method for automated creation of a mapping program, according to some embodiments;
Fig. 4 shows an example computer system useful for implementing various embodiments;
Figs. 5A-5D show examples of input and output messages;
Fig. 5E shows an example of a mapping program generated.

### DETAILED DESCRIPTION

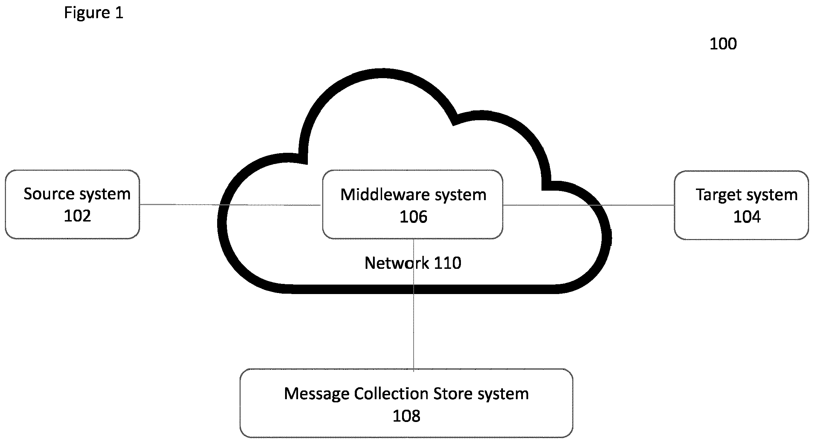

FIG. 1 is a block diagram of an environment 100 in which an application is integrated with another application using a middleware system, according to some embodiments. The environment 100 can include a source system 102, a target system 104 and a middleware system 106.

The source system 102 can be a computer system at a business's, organization's, or other entity's premises. The source system 102 can be any of a server computer, computer cluster, desktop workstation, laptop or notebook computer, netbook, tablet, personal digital assistant (PDA), smart phone, smart watch or other wearable, appliance, part of the Internet-of-Things, and/or embedded system, to name a few non-limiting examples, or any combination thereof. The source system 102 can run an application that integrates with one or more cloud applications. For example, the source system 102 can run an application that generates and transmits order requests to a seller's cloud application running at the target system 104.

The target system 104 can represent cloud computing resources controlled by a business, organization, or other entity. The target system 104 can also be a computer system at a business's, organization's, or other entity's premises. The target system 104 can be any of a server computer, computer cluster, desktop workstation, laptop or notebook computer, netbook, tablet, personal digital assistant (PDA), smart phone, smart, watch or other wearable, appliance, part of the Internet-of-Things, and/or embedded system, to name a few non-limiting examples, or any combination thereof. The target system 104 can run an application that integrates with an application running at source system 102. For example, the target system 104 can run an application that processes an order request from a buyer application at the source system 102.

An application running at the source system 102 can communicate with an application running at the target system 104 to complete a logical process (e.g., a business process). For example, the business process can include completing a purchase order with a seller. This can involve a buyer application at the source system 102 creating an order request document. The buyer application can transmit the order request to a seller application at the target system 104. The seller application can process the order request and create an order confirmation document. The seller application can then transmit the order confirmation to the buyer application. Once the order is ready to ship, the seller application can further generate a ship notice document and transmit the ship notice to the buyer application. Lastly, the seller application can generate an invoice request document and transmit the invoice request to the buyer application. Thus, the buyer and seller applications perform a series of transactions in order to complete the business process.

To integrate an application running at the source system 102 with an application running at the target system 104, the application running at the source system 102 can generate one or more messages (e.g., an eXtensible Markup Language (XML) message) for a newly created document (e.g., an order request document). The application running at the source system 102 can transmit the messages (hereinafter called source messages) to the application running at the target system 104. The application running at the source system 102 can transmit the messages over a network 110. The network 110 can include, without limitation, wired and/or wireless intranet, extranet, Internet, cellular. Bluetooth and/or any other local, short range, ad hoc, regional, global communications network, as well as any combination thereof.

An application running at the source system 102 can convert a new created document into one or more messages having a standardized format (e.g., an XML message). But this is often insufficient for integrating the application running at the source system 102 with an application running at the target system 104. This is because the source system 102 and the target system 104 can use different schemas for their messages. To overcome this technological problem, the application running at the source system 102 can exchange messages with the application running at the target system 104 through the middleware system 106.

The middleware system 106 can be a computer system controlled by a business, organization, or other entity that in some cases may be different than the entities that control the source system 102 and the target system 104. The middleware system 106 can be any of a server computer, computer cluster, desktop workstation, laptop or notebook computer, netbook, tablet, personal digital assistant (PDA), smart phone, smart watch or other wearable, appliance, part of the Internet-of-Things, and/or embedded system, to name a few non-limiting examples, or any combination thereof. The middleware system 106 can transform source messages from the application running at the source system 102 to target messages that can be processed by the application running at the target system 104. This can enable the integration of the application running at the source system 102 with the application running at the target system 104. For example, the middleware system 106 can transform a source message in a source format from the application running at the source system 102 to a target message in a target format for the application running at the target system 104.

The middleware system 106 can transform a message in a source format from the application running at the source system 102 to a message in a target format for the application running at the target system 104 based on a mapping between the application at the source system 102 and the application at the target system 104, the mapping defined by a mapping program. The mapping program can map the schema of the message from the source system 102 to the schema of the message for the target system 104. The mapping program can ensure that the application at the source system 102 can reliably communicate with the application at the target system 104 to complete a logical process (e.g., a business process). Thus, the mapping program can represent integration content for the source system 102 and the target system 104. In case of replacing an old middleware system by a new middleware system, it's very difficult to create said mapping program for the new middleware system in a manual manner, due to a high number of variants of source-target message combinations.

To solve these technological problems, a message collection store system 108 is provided to generate a new mapping program for the new middleware system 106 based on messages previously transmitted through the old middleware system 106. The new mapping program will take into account multiple variants of source-target message combinations thus making the integration between two applications much more reliable compared to the mapping created from a single electronic message exchange.

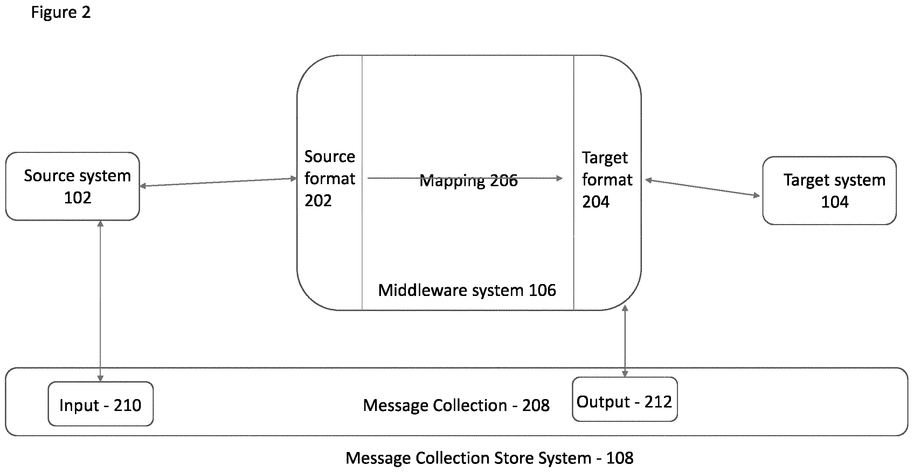

Fig. 2 is a block diagram illustrating the use of the message collection store system 108 to generate the mapping program to allow communication between the source system 102 and the target system 108, according to some embodiments. FIG. 2 is described with reference to FIG. 1.

The message collection store system 108 can create one or more message collections based on messages exchanged in the past through the middleware system 106 by the source system 102 and the target system 104. The message collection store system 108 can then generate a new mapping program based on the one or more message collections. The mapping program can be also generated in another application (outside of the message collection store system 108) based on the one or more messages collections created at the message collection store system 108.

A message collection can represent a specific order to complete a logical process. For example, in the case of a placing an order between a buyer at the source system 102 and a seller at the target system 104, a message collection can represent multiple component message collections. For example, one component message collection may be related to creating an order request document at the source system 102 and transmitting the order request to the target system 104. A second component message collection may be related to the target system 104 creating an order confirmation document and transmitting the order confirmation to the source system 102. A third component message collection can be related to the target system 104 creating a ship notice document and transmitting the ship notice to the source system 102. A fourth component message collection can be related to the target system 104 creating an invoice request document and transmitting the invoice request to the source system 102. These four component message collections can represented messages transmitted between the systems 102, 104 in order to complete a purchase order business process.

Initially, the source system 102 can be integrated with the target system 104 through an old middleware system 106. This can involve the source system 102 exchanging messages with the target system 104 through the old middleware system 106. For example, in response to creating a document in the source system 102, the source system 102 can generate a message corresponding to the document and transmit it to the middleware system 106. The middleware system 106 can then transmit the message to the target system 104. The message can represent a logical transaction of an associated business process. The message can also be the basis for a new message collection.

The source system 102 can generate a message based on a source format 202. A message in the source format 202 can have a specific schema. Similarly, the target system 104 can generate and receive a message based on a target format 204. A message in the target format 204 can have a different schema than a message in the source format 202. To enable the integration of the source system 102 and the target system 104, the middleware system 106 can transform a message from the source system 102 in the source format 202 to a message for the target system 104 in the target format 204. The middleware system 106 can represent the transformation of a message in the source format 202 to a message in the target format 204 as a mapping program 206.

When changing the middleware system 106, it is necessary to prepare a new mapping program 206 for the new middleware system 106, to enable integration of the source system 102 with the target system 104. However, manual creation of the mapping may be cumbersome, error prone and slow.

To create a new mapping program 206, the present solution proposes to use many source-target historical messages and automatically generate the new mapping program which will be valid for all stored source-target messages transmitted in the past.

To automatically create the new mapping program 206, the message collection store system 108 can create a message collection based on messages previously generated between the source system 102 and the target system 104 while they were communicating via the old middleware system 106. For example, the message collection store system 108 can create a message collection based on a set of baseline messages exchanged through the old middleware system 106.

The middleware system 106 can store the messages exchanged between the source system 102 and the target system 104 in a log for a period of time. Thus, a message in the log of the middleware system 106 can represent the successful completion of a baseline logical transaction for a logical process (e.g., a business process). To create a new mapping program between the source system 102 and the target system 104, the message collection store system 108 can use the messages in the log of the middleware system 106 to create message collections that model existing logical transactions that were successfully performed between the source system 102 and the target system 104.

To create message collections, the message collection store system 108 can select an originating message (also referred to as a parent message) from the log of the middleware system 106. An originating message can be a message (e.g., an order request message) that begins a logical process (e.g., completing a purchase order).

The message collection store system 108 can select the originating message based on document type (e.g., order request, order confirmation, invoice type, etc.) and a transaction number (also referred to as a document number). A transaction number can represent a logical transaction related to a document type for a logical process.

In response to selecting the originating message from the log of the middleware system 106, the message collection store system 108 can identify related messages in the log of the middleware system 106. The related messages can represent other logical transactions that make up the same logical process (e.g., business process).

The message collection store system 108 can identify the related messages based on the transaction number (or document number) associated with the originating message. The message collection store system 108 can query the log of the middleware system 106 for messages that reference the transaction number of the originating message. In response, the message collection store system 108 can receive from the middleware system 106 the messages that reference the transaction number of the originating message. This set of messages can be referred to child messages. The message collection store system 108 can then repeat the query process for the child messages. For example, a purchase order message can have an invoice message as a child message, and the invoice message can have a remittance message as child of itself. The message collection store system 108 can repeat the query process until it receives messages that do not have further child messages. As would be appreciated by a person of ordinary skill in the art, the message Collection Store system 108 can identify the related messages based on various other criteria and using various other mechanisms.

After identifying the set of messages (e.g., the originating message and related messages), the message collection store system 108 can order the set of messages based on transaction log end date. The resulting order of the set of messages can represent the order in which the corresponding message collections are run to complete the associated logical process.

The message collection store system 108 can also download the source format 202 and the target format 204 pairs for each message in the set of messages from the middleware system 106. In other words, the message collection store system 108 can download the mapping 206 for the set of messages. For example, the message collection store system 108 can download a baseline output file based on the mapping 206 for the set of messages. The message collection store system 108 can store the source format 202 and the target format 204 pairs for each message in the set of messages.

The message collection store system 108 can create a message collection 208 for each message in the set of messages. The message collection store system 108 can store the source format 202 and the target format 204 pair for the message in the message collection 208 as an input 210 and an output 212, respectively. The message collection store system 108 can further order the message collections 208 for mapping program creation based on the order of the corresponding messages.

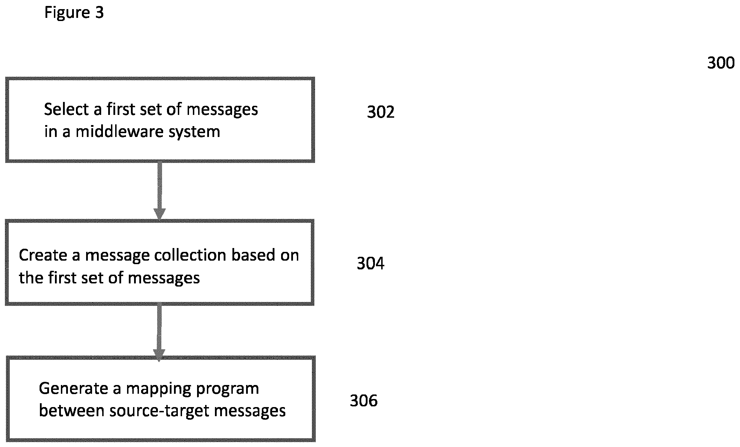

FIG. 3 is a flowchart for a method 300 for automated creation of a mapping program between a source system and a target system, according to an embodiment. The method 300 can be performed by a processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 3, as will be understood by a person of ordinary skill in the art.

The method 300 shall be described with reference to FIGS. 1 and 2. However, the method 300 is not limited to those example embodiments.

In 302, the message collection store system 108 selects a set of messages in the middleware system 106. The first set of messages can represent performance of a logical process (e.g., a business process) between the source system 102 and the target system 104. The message collection store system 108 can optionally order the first set of messages based on a transaction log date.

The message collection store system 108 can select the first set of messages by selecting an originating message in a log of the middleware system 105. The originating message can represent a first message in the logical process between the source system 102 and the target system 104.

In 304, the message collection store system 108 creates one or more message collections based on the first set of messages. The message collection store system 108 can create a message collection for each message in the first set of messages.

In 306, the message collection store system 108 performs automated creation of a new mapping program based on the message collection, using known methods, such as machine learning, artificial intelligence or other known techniques, so that the mapping program meets the requirements of the new middleware system.

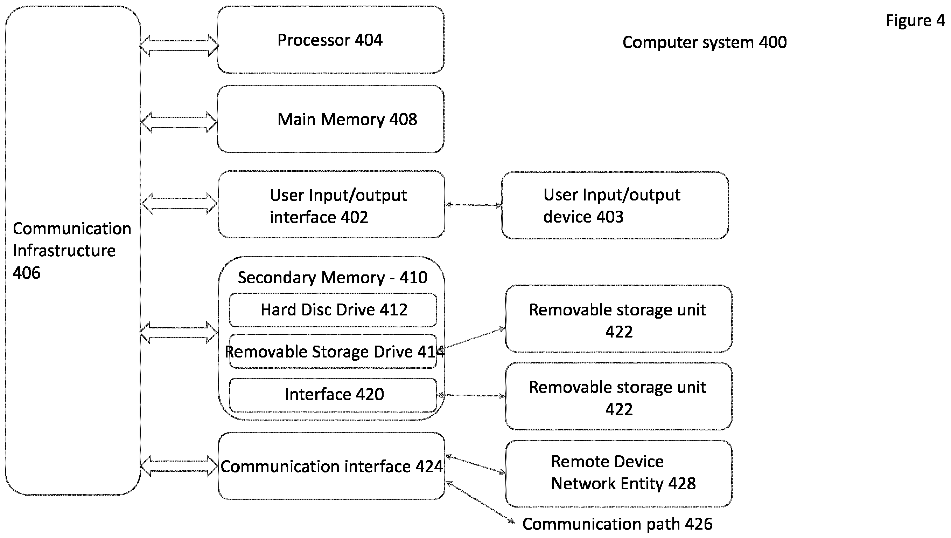

Various embodiments can be implemented, for example, using one or more computer systems, such as a computer system 400 shown in FIG. 4.

The Computer system 400 can be used, for example, to implement the method 400 of FIG. 4. For example, the computer system 400 can determine a resource block allocation of a portion of a tone space using a lookup table. The computer system 400 can further map a plurality of tones to a resource block based on the determined resource block allocation, according to some embodiments. The computer system 400 can be any computer capable of performing the functions described herein.

The computer system 400 can be any well-known computer capable of performing the functions described herein.

The computer system 400 includes one or more processors (also called central processing units, or CPUs), such as a processor 404. The processor 404 is connected to a communication infrastructure or a bus 406.

One or more processors 404 may each be a graphics processing unit (GPU). In an embodiment, a GPU is a processor that is a specialized electronic circuit designed to process mathematically intensive applications. The GPU may have a parallel structure that is efficient for parallel processing of large blocks of data, such as mathematically intensive data common to computer graphics applications, images, videos, etc.

The computer system 400 also includes user input/output device(s) 403, such as monitors, keyboards, pointing devices, etc., that communicate with a communication infrastructure 406 through user input/output interface(s) 402.

The computer system 400 also includes a main or primary memory 408, such as random access memory (RAM). The main memory 408 may include one or more levels of cache. The main memory 408 has stored therein control logic (i.e., computer software) and/or data.

The computer system 400 may also include one or more secondary storage devices or memory 410. The secondary memory 410 may include, for example, a hard disk drive 412 and/or a removable storage device or drive 414. The removable storage drive 414 may be a floppy disk drive, a magnetic tape drive, a compact disk drive, an optical storage device, tape backup device, and/or any other storage device/drive.

The removable storage drive 414 may interact with a removable storage unit 418. The removable storage unit 418 includes a computer usable or readable storage device having stored thereon computer software (control logic) and/or data. The removable storage unit 418 may be a floppy disk, magnetic tape, compact disk, DVI), optical storage disk, and/any other computer data storage device. The removable storage drive 414 reads from and/or writes to the removable storage unit 418 in a well-known manner.

According to an exemplary embodiment, the secondary memory 410 may include other means, instrumentalities or other approaches for allowing computer programs and/or other instructions and/or data to be accessed by the computer system 400. Such means, instrumentalities or other approaches may include, for example, a removable storage unit 422 and an interface 420. Examples of the removable storage unit 422 and the interface 420 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

The computer system 400 may further include a communication or network interface 424. The communication interface 424 enables the computer system 400 to communicate and interact with any combination of remote devices, remote networks, remote entities, etc. (individually and collectively referenced by reference number 428). For example, the communication interface 424 may allow the computer system 400 to communicate with remote devices 428 over communications path 426, which may be wired and/or wireless, and which may include any combination of LANs, WANs, the Internet, etc. Control logic and/or data may be transmitted to and from the computer system 400 via the communication path 426.

In an embodiment, a tangible, non-transitory apparatus or article of manufacture comprising a tangible, non-transitory computer useable or readable medium having control logic (software) stored thereon is also referred to herein as a computer program product or program storage device. This includes, but is not limited to, the computer system 400, the main memory 408, the secondary memory 410, and the removable storage units 418 and 422, as well as tangible articles of manufacture embodying any combination of the foregoing. Such control logic, when executed by one or more data processing devices (such as the computer system 400), causes such data processing devices to operate as described herein.

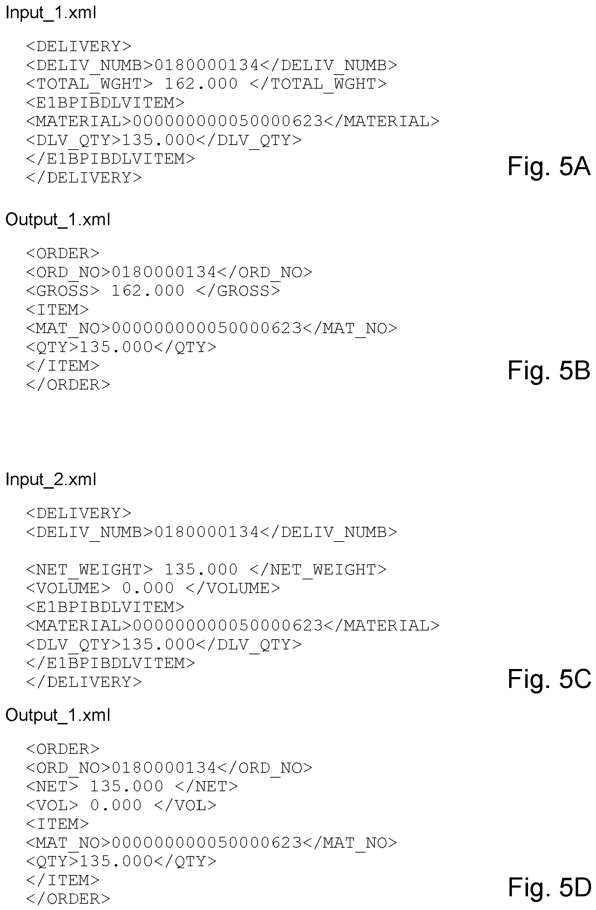

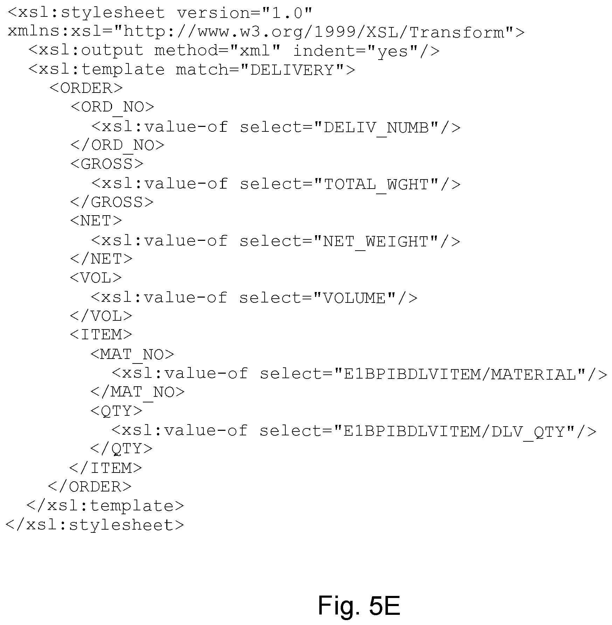

In an example practical application, the method according to the invention can be performed as follows:
a) gathering multiple message exchanges, for example delivery information, each consisting of an input delivery message used by the sending business system in XML format (Input_1.xml, Input_2.xml, ..., Input_X.xml) and a corresponding output delivery message used by the receiving business system, in XML format (Output_1.xml, Output_2.xml, ..., Output_X.xml), from a middleware system - an example of a first input message Input_1.xml content is presented in Fig. 5A and its corresponding first output message Output_1.xml content is presented in Fig. 5B; an example of a second input message Input_2.xml content is presented in Fig. 5C and its corresponding second output message Output_2.xml content is presented in Fig. 5D;
b) creating a collection of source and target messages from the gathered message exchanges in the message store system;
c) using a generative AI system to generate a mapping program based on the collection of source and target messages;
d) outputting the generated mapping program in XSLT format as XSLT_MAPPING.txt, an example of which is shown in Fig. 5E, which can be used in the new middleware system.

This application of the invention solves the problem of creating a mapping program for a new middleware system when the old mapping program and its documentation are unavailable. The presented method leverages historical message exchanges and a generative AI system to automatically generate a new mapping program that is compatible with the new middleware system.

Based on the teachings contained in this disclosure, it will be apparent to persons skilled in the relevant art(s) how to make and use embodiments of this disclosure using data processing devices, computer systems and/or computer architectures other than that shown in FIG. 4. In particular, embodiments can operate with software, hardware, and/or operating system implementations other than those described herein.

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described can include a particular feature, structure, or characteristic, but every embodiment can not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled." and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary embodiments, but should be defined only in accordance with the following claims and their equivalents.

## Claims

1. A computer-implemented method for creating a mapping program (206) for use by a new middleware system (106) to be used between a source system (102) and a target system (104) communicating via an old middleware system (106), the method comprising:
- selecting (302) a first set of messages in the old middleware system (106), wherein the first set of messages represent performance of a process between the source system (102) and the target system (104);
- creating (304) a message collection (208) based on the first set of messages;
- generating (306) the mapping program (206) for use by the new middleware system (106) based on the message collection (208).

2. The method of claim 1, further comprising ordering the first set of messages based on a transaction log date.

3. The method of any of previous claims, wherein the selecting (302) comprises: selecting an originating message in a log of the old middleware system (106), wherein the originating message represents a first message in the process between the source system (102) and the target system (104); and selecting one or more messages related to the originating message in the log of the old middleware system (106), wherein the first set of messages comprise the originating message and the one or more messages related to the originating message in the log of the old middleware system (106).

4. The method of any of previous claims, wherein the creating (304) comprises creating a message collection based on a message in the first set of messages and the baseline mapping for the first set of messages.

5. The method of any of previous claims, further comprising outputting a set of mapping programs.

6. A computer system (400) comprising:
- a memory (408); and
- at least one processor (404) coupled to the memory and configured to perform the method of any of previous claims.

7. A non-transitory computer-readable storage device having instructions stored thereon that, when executed by at least one computing device, causes the at least one computing device to perform the method of any of claims 1-5.
